(19) **Europäisches Patentamt**
**European Patent Office**
**Office européen des brevets**

(11) **EP 2 578 657 A1**

(12) # EUROPEAN PATENT APPLICATION
published in accordance with Art. 153(4) EPC

(43) Date of publication:
**10.04.2013 Bulletin 2013/15**

(51) Int Cl.:
**C09J 201/10** (2006.01)   **C09J 11/06** (2006.01)
**C09J 133/06** (2006.01)   **C09J 171/02** (2006.01)

(21) Application number: **11789416.2**

(22) Date of filing: **26.05.2011**

(86) International application number:
**PCT/JP2011/002939**

(87) International publication number:
**WO 2011/152002 (08.12.2011 Gazette 2011/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2010 JP 2010128213**

(71) Applicant: **Kaneka Corporation**
**Osaka-shi, Osaka 530-8288 (JP)**

(72) Inventors:
• **FUJIMOTO, Toyohisa**
**Takasago-shi, Hyogo 676-8688 (JP)**
• **OKAMOTO, Toshihiko**
**Takasago-shi, Hyogo 676-8688 (JP)**

(74) Representative: **Hart-Davis, Jason et al**
**Cabinet Beau de Loménie**
**158, rue de l'Université**
**75340 Paris Cedex 07 (FR)**

(54) **MOISTURE-CURING REACTIVE HOT MELT ADHESIVE COMPOSITION**

(57)     Provided is a curable composition prepared using a less toxic reactive silyl group-containing polymer, wherein the curable composition is useful as a reactive hot melt adhesive having an excellent balance between storage stability at high temperatures and curability at room temperature. The moisture-curing reactive hot melt adhesive composition comprises either: (A1) an organic polymer containing a reactive silicon group having two hydrolyzable groups and, as a curing catalyst, (B1) a metal carboxylate and/or a carboxylic acid; or (A2) an organic polymer containing a reactive silicon group having three hydrolyzable groups and, as a curing catalyst, (B2) a tetravalent tin compound.

**Description**

TECHNICAL FIELD

The present invention relates to a curable composition useful as a moisture-curing reactive hot melt adhesive, more specifically to a curable composition useful as a moisture-curing reactive hot melt adhesive excellent in storage stability at high temperatures.

BACKGROUND ART

Generally, hot melt adhesives are quick-curing adhesives, so that automation and reduction of manufacturing processes can be achieved. Further, hot melt adhesives are solvent-free and environmentally-compatible adhesives, so that they are widely used. However, since hot melt adhesives are melted by heat and solidified by cooling to provide adhesion, the adhesiveness has a limitation particularly in view of heat resistance and the use of hot melt adhesives is limited.

In recent years, in order to overcome such problems, reactive hot melt adhesives that take advantage of a crosslinking reaction after bonding have been actively developed. Typically, urethane reactive hot melt adhesives are known which include, as a main component, a prepolymer that contains an isocyanate group in its molecule and have an improved heat resistance utilizing a crosslinking reaction of an isocyanate group after bonding. However, highly toxic isocyanate compounds are used in urethane reactive hot melt adhesives, and they volatilize during the manufacturing process or use of the adhesives. For this reason, reactive hot melt adhesives prepared by using a reactive silyl group-containing polymer have been developed as reactive hot melt adhesives containing no isocyanate compound.

For example, Patent Literatures 1 and 2 disclose such reactive hot melt adhesives prepared by using a reactive silyl group-containing polymer. Patent Literature 1 discloses that reactive hot melt adhesives excellent in heat-resistant adhesiveness are obtained from a reactive silyl group-containing oxyalkylene polymer and an alkyl(meth)acrylate polymer or copolymer (alkyl(meth)acrylate (co)polymer). Patent Literature 2 discloses that general-purpose adhesives and reactive hot melt adhesives that are excellent in heat-resistant adhesiveness are obtained from a reactive silyl group-containing polymer and a resin which solidifies at ordinary temperatures.

As disclosed in Patent Literature 3, stability during heating (no increase in viscosity) and curability at room temperature need to be balanced in reactive hot melt adhesives. However, the compositions disclosed in Patent Literatures 1 and 2 both have insufficient stability during heating. Specifically, since reactive hot melt adhesives need to be heated to melt before coating, a silyl group reacts to increase the viscosity of the composition, which may cause clogging in a pipe line. In order to solve such a problem, for example, the amount of a curing catalyst may be reduced. However, in such a case, the curing speed after coating is slow or curing does not proceed sufficiently, which results in insufficient adhesive strength.

The fact is that, as a composition for reactive hot melt adhesives prepared by using a less toxic reactive silyl group-containing polymer, no composition having both storage stability during melting by heating and curability at room temperature after coating has been achieved.

CITATION LIST

PATENT LITERATURE

Patent Literature 1: JP H04-335080 A
Patent Literature 2: JP H06-271834 A
Patent Literature 3: JP H07-258620 A

SUMMARY OF INVENTION

TECHNICAL PROBLEM

In such circumstances, as a curable composition prepared by using a less toxic reactive silyl group-containing polymer, development of a curable composition useful as a reactive hot melt adhesive that has sufficient storage stability during melting by heating and rapidly cures after coating even at room temperature has been looked for.

SOLUTION TO PROBLEM

As a result of intensive investigations by the present inventors in an attempt to solve the above problems, it has been found that a combination of a specific curing catalyst with a reactive silyl group-containing polymer provides a curable composition useful as a reactive hot melt adhesive that has sufficient storage stability during melting by heating and rapidly cures after coating even at room temperature. Thus, the present invention has been completed.

That is, the present invention relates to the followings.

(I) A moisture-curing reactive hot melt adhesive composition comprising:

(A1) an organic polymer containing a reactive silyl group represented by the general formula (1):

$-SiR^1X_2$    (1)

wherein $R^1$ is independently at least one selected from the group consisting of C1-C20 alkyl groups, C6-C20 aryl groups, and C7-C20 aralkyl groups; and X is a hydroxyl group or a hydrolyzable group; and
(B1) a metal carboxylate and/or a carboxylic acid as a curing catalyst.

(II) The moisture-curing reactive hot melt adhesive composition according to (I), further comprising as a component (C) an amine compound containing no reactive silyl group.
(III) The moisture-curing reactive hot melt adhesive composition according to any one of (I) and (II), wherein the metal carboxylate (B1) is a tin carboxylate.
(IV) The moisture-curing reactive hot melt adhesive composition according to any one of (I) to (III), wherein a carbon atom adjacent to a carbonyl group of the metal carboxylate and/or the carboxylic acid (B1) is a quaternary carbon.
(V) A moisture-curing reactive hot melt adhesive composition comprising:

(A2) an organic polymer containing a reactive silyl group represented by the general formula (2):

$-SiX_3$    (2)

wherein X is a hydroxyl group or a hydrolyzable group; and
(B2) a tetravalent tin compound as a curing catalyst.

(VI) The moisture-curing reactive hot melt adhesive composition according to (V), wherein the tetravalent tin compound (B2) is a dialkyltin dicarboxylate.
(VII) The moisture-curing reactive hot melt adhesive composition according to any one of (V) and (VI), wherein the tetravalent tin compound (B2) is a dialkyltin dilaurate.
(VIII) The moisture-curing reactive hot melt adhesive composition according to any one of (I) to (VII), further comprising as a component (D) an alkyl(meth)acrylate (co)polymer.
(IX) The moisture-curing reactive hot melt adhesive composition according to any one of (V) to (VIII), wherein the amount of the tetravalent tin compound (B2) is 0.01 to 2 parts by weight based on 100 parts by weight of the component (A2) or based on 100 parts by weight of a combination of the component (A2) and the component (D) if the composition includes the component (D).
(X) The moisture-curing reactive hot melt adhesive composition according to any one of (I) to (IX), wherein a main chain of the organic polymer (A1) or (A2) containing a reactive silyl group is a polyoxyalkylene polymer.
(XI) The moisture-curing reactive hot melt adhesive composition according to any one of (VIII) to (X), wherein the alkyl(meth)acrylate (co)polymer (D) contains a reactive silyl group represented by the formula (1) or (2), the above reactive silyl group being the same as the reactive silyl group of the component (A1) or (A2).
(XII) The moisture-curing reactive hot melt adhesive composition according to any one of (VIII) to (XI), wherein with respect to the proportion of the organic polymers (A1) or (A2) containing a reactive silyl group and the (co)polymer (D), an amount of the component (A1) or (A2) is 10 to 70 parts by weight and an amount of the component (D) is 30 to 90 parts by weight based on 100 parts by weight of a combination of the components (A) and (D).
(XIII) The moisture-curing reactive hot melt adhesive composition according to any one of (I) to (XII), further comprising as a component (E) a tackifier resin.

ADVANTAGEOUS EFFECTS OF INVENTION

The present invention can provide a curable composition useful as a less toxic moisture-curing reactive hot melt adhesive wherein storage stability during melting by heating and curability at room temperature after coating are balanced.

DESCRIPTION OF EMBODIMENTS

The curable composition of the present invention includes an organic polymer containing a reactive silyl group (A1) or (A2) as an essential component. The reactive silyl group used herein is an organic group containing a hydroxyl group or a hydrolyzable group each bonded to a silicon atom. In the present application, the organic polymers (A1) and (A2) may be collectively referred to as an organic polymer (A).

The reactive silyl group-containing organic polymer (A) is crosslinkable by a siloxane bond formation as a result of a reaction promoted by a silanol condensation catalyst.

A main chain skeleton of the reactive silyl group-containing organic polymer (A) is not particularly limited and known main chain skeletons may be used. A preferable example of the skeleton is an oxyalkylene polymer having a repeating unit represented by -R-O-, wherein R is a C2-C4 bivalent alkylene group.

Examples of R include $-CH_2-$, $-CH_2CH_2-$, $-CH(CH3)CH_2-$, $-CH(C_2H_5)CH_2-$, $-CH_2CH_2CH_2CH_2-$ and $-C(CH_3)_2CH_2-$, but are not particularly limited thereto as long as R is a C2-C4 bivalent alkylene group. Particularly, $-CH(CH_3)CH_2-$ is preferable because of its easy availability. The oxyalkylene polymer may have one kind of repeating unit or plural kinds of repeating units.

The oxyalkylene polymer may be straight chained or branched, or may be a mixture thereof. The main chain skeleton may include a repeating unit other than -R-O-, wherein R is a C2-C4 bivalent alkylene group.

The amount of the repeating unit other than -R-O- (R is a C2-C4 bivalent alkylene group) in a polymer is preferably 80% by weight or less, and more preferably 50% by weight or less. Further, the amount of the repeating unit represented by -R-O- (R is a C2-C4 bivalent alkylene group) in a polymer is preferably 50% by weight or more, and more preferably 80% by weight or more.

Examples of a method for producing the main chain skeleton of the oxyalkylene polymer are not particularly limited and include:

(a1) ring opening polymerization of a monoepoxide such as ethylene oxide and propylene oxide in the presence of an initiator such as dihydric alcohols, polyhydric alcohols, and various oligomers that contain a hydroxyl group, and a known catalyst such as an alkali catalyst (e.g., KOH and NaOH), an acid catalyst, and a composite metal cyanide complex catalyst (e.g., an alumino porphyrin metal complex and a cobalt zinc cyanide-glyme complex catalyst); and

(a2) chain extension reaction of a hydroxyl group-terminated polyether polymer with a bifunctional or multifunctional alkyl halide such as $CH_2Cl_2$ and $CH_2Br_2$ in the presence of a basic compound such as KOH, NaOH, $KOCH_3$, and $NaOCH_3$; or chain extension reaction of a hydroxyl group-terminated polyether polymer with a compound that contains two or more isocyanate groups.

Particularly, ring opening polymerization of a monoepoxide using a composite metal cyanide complex catalyst is preferable in the method (a1) because the resulting polymer has a narrow molecular weight distribution and low viscosity. Reactive silyl group-containing organic polymers (A1) and (A2) respectively contain the reactive silyl groups represented by the formula (1):

$-SiR^1X_2$     (1)

wherein $R^1$ is independently at least one selected from the group consisting of C1-C20 alkyl groups, C6-C20 aryl groups, and C7-C20 aralkyl groups; and X is a hydroxyl group or a hydrolyzable group; and the formula (2):

$-SiX_3$     (2)

wherein X is a hydroxyl group or a hydrolyzable group.

The hydrolyzable group represented by X in the formulae (1) and (2) is a known hydrolyzable group and not particularly limited. Examples thereof include a hydrogen atom, a halogen atom, an alkoxy group, an acyloxy group, a ketoxymate group, an amino group, an amido group, an aminooxy group, and a mercapto group. An alkoxy group such as a methoxy group, an ethoxy group, a propoxy group, and an isopropoxy group is particularly preferable in view of its moderate hydrolyzability and handleability. A hydroxyl group and hydrolyzable groups contained in the reactive silyl group may be the same or different from each other. The number of silicon atoms in the reactive silyl group may be one or two or more. The number of silicon atoms in a reactive silyl group in which silicon atoms are bonded to each other through siloxane bonds and the like may be about 20.

Specific examples of the reactive silyl group represented by the formula (1) include a dimethoxymethylsilyl group, a diethoxymethylsilyl group and a diisopropoxymethylsilyl group. A dimethoxymethylsilyl group is particularly preferable because of its high activity which provides good curability. Examples of the reactive silyl group represented by the formula (2) include a trimethoxysilyl group, a triethoxysilyl group and a triisopropoxysilyl group. A trimethoxysilyl group and a triethoxysilyl group are particularly preferable because of its high activity which provides good curability.

The average number of reactive silyl groups in the organic polymer (A) is preferably at least 0.8, more preferably 0.8 to 3, and still more preferably 0.8 to 1.5. If the average number of reactive silyl groups in a single polymer molecule is 0.8 to 1.5, the curability and a crosslinked structure are well balanced. Thus, a resulting cured product has good adhesiveness and mechanical properties.

The reactive silyl group may be present at an end or inside of a molecular chain of the organic polymer (A). The reactive silyl group is preferably present at an end of a molecular chain because a cured product with excellent mechanical properties is likely to be obtained.

A method of introducing a reactive silyl group into an organic polymer is not particularly limited, and various methods can be employed.
Examples thereof are listed below.

(I) An organic polymer having a functional group such as a hydroxyl group, an epoxy group and an isocyanate group in the molecule is allowed to react with a compound having a reactive silyl group and a functional group that is reactive with the functional group.

(II) An organic polymer having a functional group such as a hydroxyl group in the molecule is allowed to react with an organic compound having an unsaturated group and an active group which is reactive with the functional group to provide an unsaturated group-containing organic polymer. Alternatively, an unsaturated group-containing organic polymer is obtained by copolymerization of a monomer that contains an unsaturated group that does not contribute to polymerization reaction. For example, an unsaturated group-containing organic polymer is obtained by ring opening copolymerization of an unsaturated group-containing epoxide when an organic polymer is obtained by ring opening polymerization of an epoxide. Then, the resulting reaction product is allowed to react with a reactive silyl group-containing hydrosilane for hydrosilylation.

(III) An unsaturated group-containing organic polymer obtained the same method as the method (II) is allowed to react with a compound that contains a mercapto group and a reactive silyl group.

It is preferable that, among the method (I), a hydroxyl group-terminated polymer be allowed to react with a compound having an isocyanate group and a reactive silyl group, or an isocyanate group-terminated polymer is allowed to react with a compound having an amino group and a reactive silyl group because a high introduction rate can be obtained in a relatively short reaction time. An oxyalkylene polymer obtained from such reactions has a reactive silyl group and the group represented by the formula (3):

$$-NR^2-C(=O)-\quad (3)$$

wherein $R^2$ is at least one selected from the group consisting of a hydrogen atom, C1-C20 alkyl groups, C6-C20 aryl groups, and C7-C20 aralkyl groups.

The organic polymer (A) which contains a group represented by the formula (3) can also be obtained by methods other than the above-described methods. For example, the organic polymer (A) can be obtained by chain extension reaction of a diisocyanate compound such as aromatic isocyanates (e.g., toluene (tolylene) diisocyanate, diphenylmethane diisocyanate and xylylene diisocyanate) and aliphatic isocyanates (e.g., isophorone diisocyanate and hexamethylene diisocyanate) with a polyol that contains a repeating unit -R-O- wherein R is C2-C4 bivalent alkylene groups. This polymer includes a group represented by the formula (3) independent of the method of introducing a reactive silyl group.

Examples of a method of allowing a hydroxyl group-terminated polymer to react with a compound having an isocyanate group and a reactive silyl group in the synthesis method (I) include a method disclosed in JP H03-47825 A, but are not particularly limited. Specific examples of the compound that contains an isocyanate group and a reactive silyl group include γ-isocyanate propyltrimethoxysilane, γ-isocyanate propyltriethoxysilane, γ-isocyanate propylmethyldimethoxysilane and γ-isocyanate propylmethyldiethoxysilane, but are not particularly limited. The method of allowing an isocyanate group-terminated polymer to react with a compound having an amino group and a reactive silyl group is not particularly limited and known methods are used. Although not particularly limited, specific examples of the compound having an amino group and a reactive silyl group include N-(β-aminoethyl)-γ- aminopropyltrimethoxysilane, N-(β-aminoethyl)-γ-aminopropyltriethoxysilane, γ-aminopropyltrimethoxysilane, γ-aminopropyltriethoxysilane, γ-phenylaminopropyltrimethoxysilane, ureidopropyltriethoxysilane, N-(β-aminoethyl)-γ-aminopropylmethyldimethoxysilane and γ-aminopropylmethyldiethoxysilane.

In the method (II), in order to introduce a reactive silyl group at a high introduction rate, it is preferable that an organic polymer having an unsaturated group represented by the formula (4):

$$-O-R^4-CR^3=CH_2 \quad (4)$$

wherein $R^3$ is a hydrogen atom or C1-C10 alkyl groups, and $R^4$ is CO-C20 alkylene groups;
is allowed to react with a hydrosilane compound in the presence of a group VIII transition metal catalyst. Examples of the group VIII transition metal catalyst include $H_2PtCl_6 \cdot H_2O$, a platinum-vinyl siloxane complex and a platinum-olefin complex.

$R^3$ of the formula (4) is preferably hydrogen or a methyl group. Although not particularly limited, specific examples of the hydrosilane compound include: halogenated silanes such as trichlorosilane, methyldichlorosilane, dimethylchlorosilane and phenyldichlorosilane; alkoxysilanes such as trimethoxysilane, triethoxysilane, methyldimethoxysilane, methyldiethoxysilane and phenyldimethoxysilane; acyloxysilanes such as methyldiacetoxysilane and phenyldiacetoxysilane; and ketoxymatesilanes such as bis(dimethylketoxymate)methylsilane and bis(cyclohexylketoxymate)methylsilane. Particularly, alkoxysilanes are preferable in view of the moderate hydrolyzability and handleability of the resulting composition.

Although not particularly limited, examples of the method (III) include a method in which a compound having a mercapto group and a reactive silyl group is introduced into an unsaturated-bond moiety of an organic polymer by radical addition reaction in the presence of a radical initiator and/or or a radical generation source. Although not particularly limited, specific examples of the compound that contains a mercapto group and a reactive silyl group include, γ-mercaptopropyltrimethoxysilane, γ-mercaptopropyltriethoxysilane, γ-mercaptopropylmethyldimethoxysilane, and γ-mercaptopropylmethyldiethoxysilane.

Among the methods described above, the method (I) or (II) is preferable because the polymers obtained by the method (III) have a strong odor caused by mercaptosilane. The methods (I) and (II) have advantages and disadvantages. The reactive silyl group-containing polyoxyalkylene polymer obtained by the method (II) provides a composition that has lower viscosity and better workability when compared with the polymer obtained by the method (I). Further, the polymer obtained by the method (II) is preferable because it has no organic groups such as a urethane bond and a urea bond which lower the heat resistance and the method (II) does not use a toxic isocyanate group-containing compound. The method (I) is preferable because a silyl group can be introduced into the polymer at low costs and can be prepared productively. The oxyalkylene polymer obtained by the methods (I), (II) and (III) may be used alone, or the mixture of two or more of these may be used.

The number average molecular weight (Mn) of the oxyalkylene polymer (A), determined by gel permeation chromatography (GPC) based on polystyrene standards, is preferably 10,000 to 100,000, more preferably 10,000 to 45,000, and particularly preferably 15,000 to 30,000 because of the excellent handleability and excellent property balance of adhesiveness, mechanical properties and the like of the resulting compound.

The ratio (Mw/Mn) of a weight average molecular weight (Mw) to a number average molecular weight (Mn) is, although not particularly limited, preferably 2.0 or less, more preferably 1.6 or less, and particularly preferably 1.4 or less because of low viscosity and better handleability.

The molecular weight distribution can be determined by various methods, and usually determined by gel permeation chromatography (GPC).

The curable composition of the present invention includes a curing catalyst (B) as an essential component. An appropriate curing catalyst is used in accordance with the type of a reactive silyl group included in the organic polymer (A) or the (co)polymer (D), so that the storage stability during melting by heating and the curability at room temperature after coating can both be achieved.

That is, if the organic polymer (A) contains a reactive silyl group represented by the formula (1),

$$-SiR^1 X_2 \quad (1)$$

it is effective to use in combination a metal carboxylate and/or carboxylic acid as the curing catalyst (B1).
Among the metal carboxylates and/or carboxylic acids, preferable examples of the metal carboxylates as the component (B1) include tin carboxylates, lead carboxylates, potassium carboxylates, calcium carboxylates, barium carboxylates, titanium carboxylates, zirconium carboxylates, hafnium carboxylates, vanadium carboxylates, manganese carboxylates, iron carboxylates, cobalt carboxylates, nickel carboxylates, and cerium carboxylates because of their high catalytic activities. More preferable are tin carboxylates, lead carboxylates, titanium carboxylates, iron carboxylates, and zirconium carboxylates, and particularly preferable are tin carboxylates. Divalent tin carboxylates are most preferable.

As an acid group-containing carboxylic acid of the metal carboxylate, a hydrocarbon carboxylic acid group-containing compound having 2 to 40 carbon atoms (including a carbonyl carbon) is preferably used. A C2-C20 hydrocarbon carboxylic acid may be particularly preferably used in view of its availability.

Specific examples of the carboxylic acid include: straight-chain saturated fatty acids such as acetic acid, propionic acid, butyric acid, valeric acid, caproic acid, enanthic acid, caprylic acid, 2-ethylhexanoic acid, pelargonic acid, capric acid, undecanoic acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, montanic acid, melissic acid and lacceric acid; monoenoic unsaturated fatty acids such as undecylenic acid, linderic acid, tsuzuic acid, physeteric acid, myristoleic acid, 2-hexadecenoic acid, 6-hexadecenoic acid, 7-hexadecenoic acid, palmitoleic acid, petroselinic acid, oleic acid, elaidic acid, asclepic acid, vaccenic acid, gadoleic acid, gondoic acid, cetoleic acid, erucic acid, brassidic acid, selacholeic acid, ximenic acid, lumequeic acid, acrylic acid, methacrylic acid, angelic acid, crotonic acid, isocrotonic acid and 10-undecenoic acid; polyenoic unsaturated fatty acids such as linoelaidic acid, linolic acid, 10,12-octadecadi-enoic acid, hiragonic acid, $\alpha$-eleostearic acid, $\beta$-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, nisinic acid and docosahexaenoic acid; branched fatty acids such as 1-methylbutyric acid, isobutyric acid, 2-ethylbutyric acid, isovaleric acid, tuberculostearic acid, pivalic acid and neodecanoic acid; triple bond-containing fatty acids such as propiolic acid, tariric acid, stearolic acid, crepenynic acid, xymenynic acid and 7-hexadecynoic acid; alicyclic carboxylic acids such as naphthenic acid, malvalic acid, sterculic acid, hydnocarpic acid, chaulmoogric acid and gorlic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2-hydroxyhexadecanoic acid, jalapinolic acid, juniperic acid, ambrettolic acid, aleuritic acid, 2-hydroxyoctadecanoic acid, 12-hydroxyoctadecanoic acid, 18-hydroxyoctadecanoic acid, 9,10-dihydroxyoctadecanoic acid, ricinolic acid, kamlolenic acid, licanic acid, ferron and cerebronic acid; and halogen-substituted monocarboxylic acids such as chloroacetic acid, 2-chloroacrylic acid and chlorobenzoic acid. Examples of an aliphatic dicarboxylic acid include: saturated dicarboxylic acids such as adipic acid, azelaic acid, pimelic acid, suberic acid, sebacic acid, ethylmalonic acid, glutaric acid, oxalic acid, malonic acid, succinic acid and oxydiacetic acid; and unsaturated dicarboxylic acids such as maleic acid, fumaric acid, acetylenedicarboxylic acid and itaconic acid. Examples of an aliphatic polycarboxylic acid include tricarboxylic acids such as aconitic acid, citric acid, and isocitric acid. Examples of an aromatic carboxylic acid include: aromatic monocarboxylic acids such as benzoic acid, 9-anthracenecarboxylic acid, atrolactic acid, anisic acid, isopropylbenzoic acid, salicylic acid and toluic acid; and aromatic polycarboxylic acids such as phthalic acid, isophthalic acid, terephthalic acid, carboxyphenylacetic acid and pyromellitic acid. Other examples include amino acids such as alanine, leucine, threonine, asparagic acid, glutamic acid, arginine, cysteine, methionine, phenylalanine, tryptophan and histidine.

The carboxylic acid is preferably 2-ethylhexanoic acid, octylic acid, neodecanoic acid, oleic acid, naphthenic acid, or the like, because of their easy availability, low costs, and good compatibility with the component (A1).

If the carboxylic acid has a high melting point (high crystallinity), a metal carboxylate that contains the acid group (of the carboxylic acid) also has a high melting point and tends to have poor handleability (poor workability). Therefore, the melting point of the carboxylic acid is preferably 65°C or lower, more preferably -50°C to 50°C, and particularly preferably -40°C to 35°C.

Also if the carboxylic acid has a large number of carbons (large molecular weight), a metal carboxylate that contains the acid group (of the carboxylic acid) is in a solid or highly viscous liquid form and has poor handleability (poor workability). On the other hand, if the carboxylic acid has a small number of carbons (small molecular weight), a metal carboxylate that contains the acid group (of the carboxylic acid) may include components that are easily vaporized by heating and the catalytic function of the metal carboxylate may decrease. In particular, if a composition is thinly spread (thin-layered), vaporization by heating is great, which may significantly lower the catalytic function of the metal carboxylate. Therefore, the number of carbons in the carboxylic acid is preferably 2 to 20, more preferably 6 to 17, and particularly preferably 8 to 12, including the carbon of the carbonyl group.

In view of handleability (workability, viscosity), the metal carboxylate is preferably a metal dicarboxylate or a metal monocarboxylate, and more preferably a metal monocarboxylate.

In addition, the metal carboxylate (B1) is more preferably one in which the carbon atom adjacent to the carbonyl group is a tertiary carbon (e.g., tin 2-ethylhexanoate) or a quaternary carbon (e.g., tin neodecanoate, tin pivalate) because of a high curing rate. The metal carboxylate (B1) is particularly preferably one in which the carbon atom adjacent to the carbonyl group is a quaternary carbon. The metal carboxylate in which the carbon atom adjacent to the carbonyl group is a quaternary carbon provides higher adhesiveness when compared with other metal carboxylates. Specifically, tin neodecanoate, tin versatate, 2,2-dimethyloctanoic acid tin salt and 2-ethyl-2,5-dimethylhexanoic acid tin salt are preferable.

Examples of the carboxylic acid as the component (B1) include carboxylic acids that contain the acid group of the above mentioned metal carboxylate.

As in the case of the carboxylic acid that contains the acid group of the metal carboxylate as the component (B1), the number of carbons, including the carbon of the carbonyl group, of the carboxylic acid is preferably 2 to 20, more preferably 6 to 17, and particularly preferably 8 to 12. In view of handleability (workability, viscosity), the carboxylic acid is preferably a dicarboxylic acid or monocarboxylic acid, and more preferably a monocarboxylic acid. In addition, the carboxylic acid is more preferably one in which the carbon atom adjacent to the carbonyl group is a tertiary carbon (e.g., 2-ethylhexanoic acid) or a quaternary carbon (e.g., neodecanoic acid, pivalic acid) because of a high curing rate. The carboxylic acid is particularly preferably one in which the carbon atom adjacent to the carbonyl group is a quaternary carbon.

In view of availability, curability and workability, the carboxylic acid is particularly preferably 2-ethylhexanoic acid, neodecanoic acid, versatic acid, 2,2-dimethyloctanoic acid and 2-ethyl-2,5-dimethylhexanoic acid.

The amount of the metal carboxylate and/or the carboxylic acid as the component (B1) is preferably 0.01 to 20 parts by weight, further preferably 0.5 to 10 parts by weight, and more preferably 1 to 7 parts by weight, based on 100 parts by weight of a combination of the organic polymer (A1) and the (co)polymer (D). If the amount of the metal carboxylate and/or the carboxylic acid as the component (B1) is less than the above range, the curing rate may be reduced and the catalytic activity may be reduced after storage. On the other hand, if the amount of the component (B1) exceeds the above range, storage stability at high temperatures may decrease.

The metal carboxylate and/or the carboxylic acid as the component (B1) may be used alone or two or more of these may be used in combination.

In addition, it is preferable that the metal carboxylate and/or carboxylic acid are/is one in which the carbon atom adjacent to the carbonyl group is a quaternary carbon because they are likely to achieve a high curing rate.

If the organic polymer (A) has a reactive silyl group represented by the formula (2), in order to balance the storage stability at high temperatures and the curability at room temperature, a tetravalent tin compound needs to be combined therewith as the curing catalyst (B2).

$$-SiX_3 \quad (2)$$

Examples of the tetravalent tin compound include: dibutyltin dilaurate, dibutyltin maleate, dibutyltin phthalate, dibutyltin dioctanoate, dibutyltin diethylhexanoate, dibutyltin dimethylmaleate, dibutyltin diethylmaleate, dibutyltin dibutylmaleate, dibutyltin dioctylmaleate, dibutyltin ditridecylmaleate, dibutyltin dibenzylmaleate, dibutyltin diacetate, dioctyltin dilaurate, dioctyltin diethylmaleate, dioctyltin dioctylmaleate, dibutyltin dimethoxide, dibutyltin dinonylphenoxide, dibutenyltin oxide, dibutyltin diacetylacetonate, dibutyltin diethylacetoacetonate, reaction products of dibutyltin oxide with silicate compounds, and reaction products of dibutyltin oxide and phthalate esters. Particularly, dibutyltin dilaurate and dioctyltin dilaurate are most preferable in view of good balance of the storage stability at high temperatures and the curability at room temperature, good availability and the like.

The amount of the tetravalent tin compound as the curing catalyst (B2) needs to be 0.01 to 2 parts by weight based on 100 parts by weight of a combination of the organic polymer (A2) and the (co)polymer (D). If the amount is less than 0.01 parts by weight, the curing rate is reduced. If the amount is 2 parts by weight or more, the increase of viscosity after storage at high temperatures tends to be large and a coating property tends to be reduced. In order to achieve storage stability at high temperatures and an appropriate curing rate at room temperature, the amount of the compound is more preferably 0.05 to 1 part by weight, and particularly preferably 0.1 to 0.5 parts by weight.

When the carboxylic acid and/or the metal carboxylate are/is used solely as the curing catalyst (B1), the activity may be too low to achieve appropriate curability. In such a case, it is effective to add, as a co-catalyst, the component (C) that is an amine compound containing no reactive silyl group.

Although not particularly limited, specific examples of the component (C) that is an amine compound containing no reactive silyl group include: aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine and cyclohexylamine; aliphatic secondary amines such as dimethylamine, diethylamine, dipropylamine, diisopropylamine, dibutylamine, diamylamine, dihexylamine, dioctylamine, di(2-ethylhexyl)amine, didecylamine, dilaurylamine, dicetylamine, distearylamine, methylstearylamine, ethylstearylamine and butylstearylamine; aliphatic tertiary amines such as triamylamine, trihexylamine and trioctylamine; aliphatic unsaturated amines such as triallylamine and oleylamine; aromatic amines such as laurylaniline, stearylaniline and triphenylamine; and other amines such as monoethanolamine, diethanolamine, triethanolamine, 3-hydroxypropylamine, diethylenetriamine, triethylenetetramine, benzylamine, 3-methoxypropylamine, 3-lauryloxypropylamine, 3-dimethylaminopropylamine, 3-diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazol, 1,8-diazabicyclo[5.4.0]undec-7-ene (DBU) and 1,5-diazabicyclo[4.3.0]non-5-ene (DBN).

These compounds usable as the component (C) have remarkably different co-catalyst activities due to the factors such as the structure of component (C) itself and compatibility with the component (A). Therefore, it is preferable to select an appropriate compound as the component (C) in accordance with the kind of the component (A) to be used. If a polyoxyalkylene polymer is used as the component (A), a primary amine such as octylamine and laurylamine is preferable in view of high co-catalyst activities and an amine compound that contains a hydrocarbon group that includes at least one hetero atom is preferable. Examples of the hetero atom include N, O and S, but are not particularly limited thereto. Examples of such an amine compound include amines described above as the other amines. Particularly, an amine compound containing a hydrocarbon group that contains a hetero atom at 3-position carbon or 5-position carbon is preferable. Examples of such an amine compound include ethylenediamine, ethanolamine, dimethylaminoethylamine, diethylaminoethylamine, 3-hydroxypropylamine, diethylenetriamine, 3-methoxypropylamine, 3-lauryloxypropylamine, 3-dimethylamino propylamine and 3-diethylaminopropylamine. In view of workability and storage stability in addition to co-catalyst activities, 3-diethylaminopropylamine is particularly preferable. If an isobutylene polymer is used as the component (A), aliphatic secondary amines with a comparatively long chain such as dioctylamine and distearylamine, and aliphatic secondary amines such as dicyclohexylamine are preferable in view of high co-catalyst activities.

The amount of the amine compound as the component (C) that contains no reactive silyl group is preferably 0.01 to 20 parts by weight, more preferably 0.1 to 5 parts by weight, and still more preferably 0.1 to 2 parts by weight based on 100 parts by weight of a combination of the organic polymer (A) and the (co)polymer (D). If the amount of the amine compound is less than 0.01 parts by weight, the curing rate may be reduced and the curing reaction may not proceed sufficiently. If the amount of the amine compound exceeds 20 parts by weight, a pot life may be too short, and therefore the workability tends to decrease. In addition, the curing rate may be reduced.

The curable composition of the present invention preferably includes an alkyl(meth)acrylate (co)polymer (D) (hereinafter, also referred to as (co)polymer (D)).

The alkyl(meth)acrylate (co)polymer represents a polymer that includes one kind of alkyl(meth)acrylate compound as a repeating unit, a copolymer that includes plurality of alkyl(meth)acrylate compounds as a repeating unit and a copolymer that includes one or plurality of alkyl(meth)acrylate compounds as a repeating unit and a compound copolymerizable therewith. The term "alkyl(meth)acrylate" means alkyl acrylates and/or alkyl methacrylates and has the same meaning also in the following description.

Although not particularly limited, examples of the alkyl(meth)acrylate compound used as a repeating unit include, conventionally known compounds such as methyl acrylate, ethyl acrylate, n-propyl acrylate, n-butyl acrylate, isobutyl acrylate, tert-butyl acrylate, n-hexyl acrylate, 2-ethylhexyl acrylate, decyl acrylate, undecyl acrylate, lauryl acrylate, tridecyl acrylate, myristyl acrylate, cetyl acrylate, stearyl acrylate, behenyl acrylate and biphenyl acrylate.

Although not particularly limited, examples of the methacrylate compound include conventionally known compounds such as methyl methacrylate, ethyl methacrylate, n-propyl methacrylate, n-butyl methacrylate, isobutyl methacrylate, tert-butyl methacrylate, n-hexyl methacrylate, 2-ethylhexyl methacrylate, decyl methacrylate, undecyl methacrylate, lauryl methacrylate, tridecyl methacrylate, myristyl methacrylate, cetyl methacrylate, stearyl methacrylate, behenyl methacrylate and biphenyl methacrylate.

The main chain skeleton of the alkyl(meth)acrylate (co)polymer (D) substantially includes one or two or more kinds of alkyl(meth)acrylate compounds. The phrase "substantially includes the compounds" means that the (co)polymer (D) contains a repeating unit derived from the alkyl(meth)acrylate compound in a proportion of more than 50%. The proportion of the repeating unit of alkyl(meth)acrylate compound in the (co)polymer (D) is preferably 70% or more.

Furthermore, among the alkyl(meth)acrylate compounds, in view of compatibility and stability, preferable is a copolymer (hereinafter, also referred to as (co)polymer (D)-a) in which a molecular chain substantially includes an alkyl(meth)acrylate compound (d-1) that contains a C1-C8 alkyl group and an alkyl(meth)acrylate compound (d-2) that contains an alkyl group having 10 or more carbon atoms.

The alkyl(meth)acrylate compound (d-1) that contains a C1-C8 alkyl group in the (co)polymer (D)-a is represented by the general formula (5):

$$CH_2=C(R^5)COOR^6 \quad (5)$$

wherein $R^5$ is a hydrogen atom or a methyl group; and $R^6$ is a C1-C8 alkyl group.

Although not particularly limited, examples of $R^6$ in the formula (5) include, C1-C8 alkyl groups (preferably C1-C4 alkyl groups and more preferably C1-C2 alkyl groups) such as a methyl group, an ethyl group, a propyl group, a n-butyl group, a t-butyl group and a 2-ethylhexyl group.

The group $R^6$ contained in the (co)polymers (D)-a is not always limited to one type of an alkyl group.

The alkyl(meth)acrylate compound (d-2) that contains an alkyl group that has 10 or more carbon atoms in the (co)polymer (D)-a is represented by the general formula (6) :

$$CH_2=C(R^5)COOR^7 \quad (6)$$

wherein $R^5$ is the same as that in the general formula (5); and $R^7$ is an alkyl group having 10 or more carbon atoms.

Although not particularly limited, examples of $R^7$ in the general formula (6) include long-chain alkyl groups having 10 or more, typically 10 to 30, and preferably 10 to 20 carbon atoms, such as a lauryl group, a tridecyl group, a cetyl group, a stearyl group, a C22 alkyl group and a biphenyl group. $R^7$ contained in the (co)polymer (D)-a is not always limited to one kind of alkyl group.

A molecular chain of the (co)polymer (D)-a substantially includes the compounds (d-1) and (d-2). The phrase "substantially includes the compounds (d-1) and (d-2)" means that the (co)polymer (D)-a contains repeating units derived from the compounds (d-1) and (d-2) in a proportion of more than 50%.

The proportion of the repeating unit derived from the compounds (d-1) and (d-2) in the (co)polymer (D)-a is preferably 70% or more. If the proportion of the repeating unit derived from the compounds (d-1) and (d-2) in the (co)polymer (D)-a is less than 50%, the compatibility of the reactive silyl group-containing organic polymer (A) with the (co)polymer (D)-a decreases so that a cured product tends to be turbid and the adhesion characteristics of the cured product tend to decrease.

The weight ratio of the repeating unit derived from the compound (d-1) to the repeating unit derived from the compound (d-2) in the (co)polymer (D)-a is preferably 95:5 to 40:60, and more preferably 90:10 to 60:40. If the ratio exceeds 95:5, the compatibility decreases. If the ratio is below 40:60, the costs tend to be unfavorable.

In addition to the repeating unit derived from an alkyl(meth)acrylate compound, the (co)polymer (D) may include a repeating unit derived from a compound that is copolymerizable therewith. Examples of the compound copolymerizable with the alkyl(meth)acrylate compound include, but are not particularly limited to, acrylic acid such as acrylic acid and methacrylic acid; amide group-containing compounds such as acrylamide, methacrylamide, N-methylolacrylamide and N-methylolmethacrylamide; epoxy group-containing compounds such as glycidylacrylate and glycidyl methacrylate; amino group-containing compounds such as diethyl amino ethyl acrylate, diethyl amino ethyl methacrylate and amino ethyl vinyl ether; and other compounds derived from acrylonitrile, styrene, $\alpha$-methyl styrene, alkyl vinyl ether, vinyl chloride, vinyl acetate, vinyl propionate and ethylene.

The molecular weight of the (co)polymer component (D) is not particularly limited. The number average molecular weight thereof determined by GPC based on polystyrene standards is preferably 500 to 100,000, and more preferably 1,000 to 50,000, and particularly preferably 2,000 to 20,000 because of the handleability and excellent adhesion characteristics.

Although not particularly limited, examples of a method of producing the (co)polymer (D) include general vinyl polymerization methods such as solution polymerization by radical reaction and bulk polymerization. The reaction is usually carried out by adding the above compounds, a radical initiator, a chain transfer agent, a solvent and the like at 50 to 150°C.

Examples of the radical initiator include azobisisobutyronitrile and benzoyl peroxide. Examples of the chain transfer agent include mercaptans such as n-dodecyl mercaptan, t-dodecyl mercaptan and lauryl mercaptan and halogen-containing compounds. Examples of the solvent include non-reactive solvents such as ethers, hydrocarbons and esters.

The (co)polymer (D) preferably contains a reactive silyl group represented by the general formula (1) or (2):

$$-SiR^1X_2 \quad (1)$$

$$-SiX_3 \quad (2)$$

wherein $R^1$ and X are defined as above, because the resulting cured product is excellent in adhesive strength and heat resistance.

Specific examples of the reactive silyl group represented by the general formula (1) include a dimethoxymethylsilyl group, a diethoxymethylsilyl group and a diisopropoxymethylsilyl group. Particularly, a dimethoxymethylsilyl group is preferable because high activity and good curability can be provided. Examples of the reactive silyl group represented by the general formula (2) include a trimethoxysilyl group, a triethoxysilyl group, and a triisopropoxysilyl group. Particularly, a trimethoxysilyl group and a triethoxysilyl group are preferable because high activity and good curability can be provided. A reactive silyl group of the (co)polymer (D) is preferably the same as that of the organic polymer (A) for achieving easy controllability of the reactivity and storage stability.

Although not particularly limited, examples of the method of introducing the reactive silyl group into the (co)polymer (D) include various methods as listed below.

(IV) A compound that contains a polymerizable unsaturated bond and a reactive silyl group is copolymerized with the compounds (d-1) and (d-2).

(V) A compound (for example, acrylic acid) that contains a polymerizable unsaturated bond and a reactive functional group (hereinafter, referred to as Y' group) is copolymerized with the compounds (d-1) and (d-2), and the resulting copolymer is reacted with a compound (for example, a compound containing an isocyanate group and $-Si(OCH_3)_3$) that contains a reactive silyl group and a functional group (hereinafter, referred to as Y'' group) that is reactive with Y' group.

(VI) The compounds (d-1) and (d-2) are copolymerized in the presence of a mercaptan that contains a reactive silyl group as a chain transfer agent.

(VII) The compounds (d-1) and (d-2) are copolymerized by using, as an initiator, an azobis nitrile compound or a disulfide compound which contain a reactive silyl group.

(VIII) The compounds (d-1) and (d-2) are polymerized by living radical polymerization and a reactive silyl group is introduced into a molecular terminal.

The methods (IV) to (VIII) may be optionally combined with one another. As the combination of the methods (IV) and (VI), a compound that contains a polymerizable unsaturated bond and a reactive silyl group may be copolymerized with the compounds (d-1) and (d-2) in the presence of a mercaptan having a reactive silyl group as a chain transfer agent.

Although not particularly limited, examples of the compound that contains a polymerizable unsaturated bond and a reactive silyl group described in the method (IV) include, γ-methacryloxy propylalkylpolyalkoxysilanes such as γ-methacryloxy propyltrimethoxysilane, γ-methacryloxy propylmethyldimethoxysilane and γ-methacryloxy propyltriethoxysilane; γ-acryloxy propylalkylpolyalkoxysilanes such as γ-acryloxy propyltrimethoxysilane, γ-acryloxy propylmethyldimethoxysilane and γ-acryloxy propyltriethoxysilane; and vinylalkylpolyalkoxysilanes such as vinyltrimethoxysilane, vinylmethyldimethoxysilane and vinyltriethoxysilane.

The Y' groups and the Y" groups described in the method (V) may be used in various combinations. Examples of the Y' groups include an amino group, a hydroxyl group and a carboxylic acid group. Examples of the Y" groups include an isocyanate group.

As disclosed in JP S62-70405 A, JP H09-272714 A and JP S59-168014 A, another example of the Y' group is an allyl group and that of the Y" group is a silicon hydride group (H-Si). In this case, the Y' group may be bonded to the Y" group by a hydrosilylation reaction in the presence of a VIII group transition metal.

Examples of the mercaptan including a reactive silyl group used as a chain transfer agent described in the method (VI) include γ-mercaptopropyl trimethoxysilane, γ-mercaptopropyl methyldimethoxysilane and γ-mercaptopropyl triethoxysilane. As disclosed in JP S60-228516 A, the compounds (d-1) and (d-2) may be copolymerized with each other in the presence of a bifunctional radical polymerizable compound and an alkoxy silyl group-containing mercaptan as a chain transfer agent.

Examples of the azobis nitrile compound and the disulfide compound which contain a reactive silyl group described in the method (VII) include an azobis nitrile compound that contains an alkoxy silyl group and a disulfide compound that contains an alkoxy silyl group which are disclosed in for example JP S60-23405 A and JP S62-70405 A.

The method (VIII) may be one disclosed for example in JP H09-272714 A.

Another example is a method using together a reactive silyl group-containing mercaptan and a reactive silyl group-containing radical polymerization initiator as disclosed in JP S59-168014 A and JP S60-228516 A.

The number of the reactive silyl groups in the (co)polymer (D) is not particularly limited, and preferably 0.1 or more and 4.0 or less and more preferably 0.5 or more and 2.0 or less on average in a molecule of the (co)polymer (D) in view of effects on adhesive strength and cost savings.

With respect to the proportion of the reactive silyl group-containing organic polymer (A) and the (co)polymer (D) in the composition of the present invention, the amount of the component (A) is preferably 10 to 70 parts by weight and the amount of the (co)polymer (D) is preferably 30 to 90 parts by weight based on 100 parts by weight of a combination of the reactive silyl group-containing organic polymer (A) and the (co)polymer (D). More preferably the amount of the component (A) is 20 to 60 parts by weight and the amount of the component (D) is 40 to 80 parts by weight. Still more preferably the amount of the component (A) is 20 to 50 parts by weight and the amount of the component (D) is 50 to 80 parts by weight. If the amount of the organic polymer (A) exceeds 80 parts by weight, the initial cohesive force immediately after coating of the curable composition may be insufficient and the resulting adhesive strength may decrease. If the amount of the organic polymer (A) is less than 10 parts by weight, a curable composition may be too hard after coating to bond adherends or the resulting cured product tends to be brittle and not to have good adhesiveness and durability.

The curable composition of the present invention preferably includes a tackifier resin (E).

The tackifier resin (E) used for the present invention is not particularly limited and may be ones which are commonly used. Specific examples thereof include terpene resins, aromatic modified terpene resins, hydrogenated terpene resins that are obtained by hydrogenation of the aromatic modified terpene resins, terpene-phenol resins obtained by copolymerizing terpenes with phenols, phenol resins, modified phenol resins, xylene-phenol resins, cyclopentadiene-phenol resins, coumarone-indene resins, rosin resins, rosin ester resins, hydrogenated rosin ester resins, xylene resins, low molecular weight-polystyrene resins, styrene copolymer resins, petroleum resins (for example, C5 hydrocarbon resins, C9 hydrocarbon resins, C5 hydrocarbon C9 hydrocarbon copolymer resins), hydrogenated petroleum resins, and DCPD resins. These may be used alone, or two or more kinds thereof may be used in combination.

Although not particularly limited, examples of the styrene block copolymers and hydrogenated products thereof include, a styrene-butadiene-styrene block copolymer (SBS), a styrene-isoprene-styrene block copolymer (SIS), a styrene-ethylenebutylene-styrene block copolymer (SEBS), a styrene-ethylenepropylene-styrene block copolymer (SEPS) and a styrene-isobutylene-styrene block copolymer (SIBS). The tackifier resin (E) is added in order to reduce a melting temperature during heating to provide a good coating property, secure the hardness of a solidified composition after coating and cooling, secure the compatibility of the organic polymer (A) with the (co)polymer (D), or secure the adhesion with various substrates.

The amount of the tackifier resin (E) needs to be 10 to 100 parts by weight, more preferably 20 to 80 parts by weight, and still more preferably 30 to 70 parts by weight, based on 100 parts by weight of a combination of the organic polymer (A) and the (co)polymer (D). If the amount is less than 10 parts by weight, an effect is not sufficiently obtained. If the amount exceeds 100 parts by weight, heat-resistant adhesiveness tends to be reduced or the curing rate tends to be reduced.

The curable composition of the present invention may include, if necessary, a filler, a silane coupling agent, a plasticizer and a stabilizer in addition to the above components.

Specific examples of the filler include inorganic fillers such as calcium carbonate, magnesium carbonate, titanium oxide, carbon black, fused silica, precipitated silica, diatomaceous earth, white clay, kaolin, clay, talc, wood flour, walnut shell flour, chaff powder, anhydrous silicic acid, quartz dust, aluminum dust, zinc dust, asbestos, glass fiber, carbon fiber, glass beads, alumina, glass balloon, shirasu balloon, silica balloon calcium oxide, magnesium oxide and silicon oxide; woody fillers such as pulp and cotton chips; and organic fillers such as powdered rubber, regenerated rubber, fine powder of a thermoplastic or thermosetting resin and a hollow material of polyethylene and the like. Particularly, calcium carbonate, titanium oxide, silica, kaolin, clay and talc are preferable because a curable composition prepared therefrom has high initial cohesive force and high initial adhesive strength, good adhesiveness and good heat resistance can be achieved.

These fillers may be used alone or in combination with one another.

The amount of the filler needs to be 5 to 200 parts by weight, more preferably 50 to 180 parts by weight, and most preferably 80 to 160 parts by weight, based on 100 parts by weight of a combination of the oxyalkylene polymer (A) and the (co)polymer (D). If the amount exceeds 200 parts by weight, the workability tends to decrease because of an increase in viscosity and the adhesion performance of the resulting cured product tends to decrease. If the amount is less than 5 parts by weight, sufficient effects tend not to be achieved.

Examples of the silane coupling agent include amino group-containing silanes such as N-(β-aminoethyl)-γ-aminopropyltrimethoxysilane; mercapto group-containing silanes such as γ-mercaptopropyltrimethoxysilane; epoxy group-containing silanes such as γ-glycidoxypropyltrimethoxysilane; vinyl unsaturated group-containing silanes such as vinyltrimethoxysilane; and isocyanate group-containing silanes such as γ-isocyanatepropyltrimethoxysilane. These silane coupling agents may be used alone or two or more of these may be used in combination. Particularly, aminosilanes and reaction products therefrom, epoxysilanes, and isocyanatesilanes are preferable from the view point of adhesiveness.

The silane coupling agent is preferably used in an amount of 1 to 20 parts by weight and more preferably in an amount of 2 to 10 parts by weight, based on 100 parts by weight of a combination of the oxyalkylene polymer (A) and the (co)polymer (D).

Examples of the plasticizer include: phthalates such as dioctyl phthalate and diisodecyl phthalate; aliphatic dibasic acid esters such as dioctyl adipate; epoxy plasticizers such as epoxidized soybean oil and epoxidized linseed oil; polyethers such as polypropylene glycol and its derivative; and vinyl polymers prepared by polymerizing vinyl monomers by various methods. These plasticizers may be used alone or two or more of these may be used in combination.

The amount of the plasticizer is preferably 5 to 100 parts by weight and more preferably 10 to 70 parts by weight, based on 100 parts by weight of a combination of the oxyalkylene polymer (A) and the (co)polymer (D). If the amount is less than 5 parts by weight, no effect of the plasticizer is exhibited. If the amount exceeds 100 parts by weight, the mechanical strength of the cured product becomes insufficient or sufficient adhesive strength after coating is not achieved.

Specific examples of the stabilizer include antioxidant, light stabilizer, and ultraviolet absorber.

Use of an antioxidant improves the weather resistance and the heat resistance of the cured product. Examples of the antioxidant include hindered phenol antioxidants, monophenol antioxidants, bisphenol antioxidants, and polyphenol antioxidants. Particularly, a hindered phenol antioxidant is preferable.

The amount of the antioxidant is preferably 0.1 to 10 parts by weight and more preferably 0.2 to 5 parts by weight, based on 100 parts by weight of a combination of the oxyalkylene polymer (A) and the (co)polymer (B).

Use of a light stabilizer prevents photooxidative degradation of the cured product. Examples of the light stabilizer include benzotriazole light stabilizers, hindered amine light stabilizers, and benzoate compounds. Particularly, hindered amine light stabilizers are preferable.

The amount of the light stabilizer is preferably 0.1 to 10 parts by weight and more preferably 0.2 to 5 parts by weight, based on 100 parts by weight of a combination of the oxyalkylene polymer (A) and the (co)polymer (B).

Use of an ultraviolet absorber improves the weather resistance of the surface of the cured product. Examples of the ultraviolet absorber include benzophenone ultraviolet absorbers, benzotriazole ultraviolet absorbers, salicylate ultraviolet absorbers, substituted tolyl compounds and metal chelate compounds. Particularly, benzotriazole ultraviolet absorbers are preferable.

The amount of the ultraviolet absorber is preferably 0.1 to 10 parts by weight and more preferably 0.2 to 5 parts by weight, based on 100 parts by weight of a combination of the oxyalkylene polymer (A) and the (co)polymer (B).

It is preferable to use a phenol antioxidant or a hindered phenolic antioxidant in combination with a hindered amine light stabilizer and a benzotriazol ultraviolet absorber.

The curable composition of the present invention may include, if necessary, various additives for the purpose of adjusting various physical properties of the curable composition or the cured product. Examples of the additives include flame retardants, curability modifiers, radical inhibitors, metal deactivators, antiozonants, phosphorus type peroxide decomposers, lubricants, pigments, blowing agents, solvents and antifungal agents. These may be used alone or two or more of these may be used in combination.

The curable composition of the present invention can be prepared as a one-part type curable composition which is prepared by compounding and storing all the formulation components in a hermetically-closed vessel in advance, and is cured by moisture in the air after application. The curable composition can also be prepared as a two-part type curable composition. In this case, components such as a curing catalyst, filler, plasticizer and water are blended as a curing agent and the resulting mixture and the polymer composition are mixed before use.

A method for preparing the curable composition to be applied by the coating method of the present invention is not particularly limited and may be a common method in which: the above-described components are mixed and kneaded using a mixer, a roller, a kneader or the like at ordinary temperature or under heating; or the components are dissolved in a small portion of an appropriate solvent and mixed.

The viscosity of the curable composition of the present invention is preferably 100 Pa·s or lower at 120°C and 500 Pa·s or higher at 30°C.

If the viscosity at 120°C exceeds 100 Pa·s, injection properties and workability decrease or the composition needs to be applied at high temperatures in order to secure injection properties and workability. Such a composition is difficult to be used for low heat-resistant substrates and the application of the composition is limited. The viscosity is more preferably 50 Pa·s or lower and still more preferably 20 Pa·s or lower at 120°C.

The curable composition of the present invention is excellent in storage stability at high temperatures, and is therefore suitable for use in assembly lines. Specifically, the composition can be preferably used in for example buildings, vehicles, electric and electronic components, and assembly lines for fibers, leather, clothes and bookbinding.

Use of a handgun for warming allows the composition to be used at building sites and for DIY as well as the assembly lines.

If the viscosity at 30°C is lower than 500 Pa·s, the initial cohesive force immediately after the application of the curable composition is insufficient and high adhesive strength tends not to be obtained. The viscosity is more preferably 10,000 Pa·s or higher and still more preferably 50,000 Pa·s or higher.

Since low-viscosity polymers or high temperature sensitive polymers and resins are used in the curable composition of the present invention, the curable composition can be used at relatively low temperatures as a hot melt adhesive. The composition is preferably warmed to 60 to 180°C when applied, more preferably 70 to 160°C, and particularly preferably 90 to 140°C in order to secure good workability. If the temperature is lower than 60°C, sufficient workability cannot be secured. If the temperature is higher than 180°C, the stability of the curable composition decreases or the composition cannot be used for low heat-resistant substrates and the application of the composition is thus limited.

If the curable composition is heated and used, the method of heating is not particularly limited and known methods may be used.

The curable composition of the present invention is used for various applications or bonding of substrates as a reactive hot melt adhesive. Although not particularly limited, examples of the applications include, buildings, vehicles, electric and electronic components, fibers, leather, clothes and bookbinding.

EXAMPLES

The curable composition of the present invention is described based on examples.

The present invention will be further specifically described below based on synthesis examples, production examples, and examples, but the present invention is not limited only to these synthesis examples, production examples and examples.

Synthesis examples of reactive silyl group-containing organic polymers (A1) and (A2) are described below.

(Synthesis Example 1)

Propylene oxide was polymerized using polyoxypropylene diol having a number average molecular weight of 2,000 as an initiator and a zinc hexacyanocobaltate glyme complex catalyst to give polyoxypropylene diol having a number average molecular weight of 29,000 (determined by GPC based on polystyrene standards). The resulting polyoxypropylene diol was allowed to react with sodium methoxide, and then allowed to react with allyl chloride to convert a terminal hydroxyl group into an unsaturated group.

An amount of 1 mol of an unsaturated group of the resulting terminal-unsaturated polyoxypropylene polymer was allowed to react with 0.75 mol of methyldimethoxysilane in the presence of a platinum divinyldisiloxane complex to obtain a reactive silyl group-containing oxyalkylene polymer (polymer A1-1) in which the number of methyl dimethoxysilyl groups at a molecular terminal was 1.5 on average, the number average molecular weight was 30,000 (determined by GPC based on polystyrene standards), and the molecular weight distribution was 1.20.

(Synthesis Example 2)

Propylene oxide was polymerized using polyoxypropylene diol having a number average molecular weight of 2,000 as an initiator and a zinc hexacyanocobaltate glyme complex catalyst to give polyoxypropylene diol having a number average molecular weight of 29,000 (determined by GPC based on polystyrene standards). The resulting polyoxypropylene diol was allowed to react with sodium methoxide, and then allowed to react with allyl chloride to convert a terminal hydroxyl group into an unsaturated group.

An amount of 1 mol of an unsaturated group of the resulting terminal-unsaturated polyoxypropylene polymer was allowed to react with 0.75 mol of trimethoxysilane in the presence of a platinum divinyl disiloxane complex to obtain a reactive silyl group-containing oxyalkylene polymer (polymer A2-1) in which the number of trimethoxysilyl groups at a molecular terminal was 1.5 on average, the number average molecular weight was 30,500 (determined by GPC based on polystyrene standards), and the molecular weight distribution was 1.22.

(Synthesis Example 3)

Propylene oxide was polymerized using polyoxypropylene diol having a number average molecular weight of 2,000 as an initiator and a zinc hexacyanocobaltate glyme complex catalyst to give polyoxypropylene diol having a number average molecular weight of 29,000 (determined by GPC based on polystyrene standards). An amount of 0.7 mol of $\gamma$-isocyanate propyltrimethoxysilanes was added to 1 mol of a hydroxyl group of the resulting polyoxypropylene diol. The mixture was subjected to a urethan reaction to obtain a reactive silyl group-containing polyoxyalkylene polymer (polymer A2-2) in which the number of trimethoxysilyl groups at a molecular terminal was 1.4 on average, the number average molecular weight was 31,500 (determined by GPC based on polystyrene standards), and the molecular weight distribution was 1.40.

Synthesis examples of an alkyl(meth)acrylate (co)polymer (D) are described below.

(Synthesis Example 4)

To toluene (40 g) heated to 105°C was added dropwise over 5 hours, methyl methacrylate (67 g), butyl acrylate (5 g), stearyl methacrylate (15 g), 3-(methacryloxy)propylmethyldimethoxysilane (5 g), $\gamma$-mercapto-propylmethyldimethoxysilane (8 g), and a solution of 2,2'-azobisisobutyronitrile (3 g) dissolved in toluene (15 g) as a polymerization initiator. The mixture was stirred for 2 hours. A solution of 2,2'-azobisisobutyronitrile (0.3 g) dissolved in toluene (10 g) was further added to the resulting mixture and stirred for 2 hours to obtain an acrylic copolymer (polymer D-1) in which the solid concentration was 60% by weight, the number average molecular weight was 3,000 (determined by GPC based on polystyrene standards) and the molecular weight distribution was 1.62.

(Synthesis Example 5)

To toluene (40 g) heated to 105°C was added dropwise over 5 hours, methyl methacrylate (67 g), butyl acrylate (5 g), stearyl methacrylate (15 g), 3-(methacryloxy)propyltrimethoxysilane (5 g), $\gamma$-mercaptopropyltrimethoxysilane (8 g), and a solution of 2,2'-azobisisobutyronitrile (3 g) dissolved in toluene (15 g) as a polymerization initiator. The mixture was stirred for 2 hours. A solution of 2,2'-azobisisobutyronitrile (0.3 g) dissolved in toluene (10 g) was further added to the resulting mixture and stirred for 2 hours to obtain an acrylic copolymer (polymer D-2) in which the solid concentration was 60% by weight, the number average molecular weight was 3,100 (determined by GPC based on polystyrene standards) and the molecular weight distribution was 1.66.

(Synthesis Example 6)

To toluene (40 g) heated to 105°C was added dropwise over 5 hours, methyl methacrylate (66 g), butyl acrylate (5 g), stearyl methacrylate (20 g), n-dodecylmercaptan (9 g), and a solution of 2,2'-azobisisobutyronitrile (3 g) dissolved in toluene (15 g) as a polymerization initiator. The mixture was stirred for 2 hours. A solution of 2,2'-azobisisobutyronitrile (0.3 g) dissolved in toluene (10 g) was further added to the resulting mixture and stirred for 2 hours to obtain an acrylic copolymer (polymer D-3) in which the solid concentration was 60% by weight, the number average molecular weight was 3,000 (determined by GPC based on polystyrene standards) and the molecular weight distribution was 1.62.

Examples and comparative examples are described below. (Examples 1 to 12 and Comparative Examples 1 to 4)

First, a component (A1) or (A2), a component (D), a component (E) that is dissolved in toluene, and a stabilizer were mixed in the ratios shown in Table 1 in which the amount of the component (D) is a solid content excluding toluene. Toluene was then devolatilized by heating under vacuum at 120°C. Next, a silane coupling agent shown in Table 1 was added and stirred for 5 minutes. Further, a component (B) and a component (C) were added and the mixture was stirred for 5 minutes. Finally, vacuum degassing was carried out and a one-part curable composition was filled in a metal container.

The following evaluations were performed using the resulting one-part curable composition. - Curing time;

A curable composition was warmed to 120°C and sufficiently melted and discharged from the metal container. The time at which the discharge of the composition started was defined as the start time of curing. The surface of the composition was touched with a spatula every one minute. The time period required for the composition to no longer stick to the spatula was determined as skinning time (curing time).

The curing time was determined at a temperature of 23 ± 2°C and a relative humidity of 50 ± 10%.

- Storage stability at high temperatures

The metal container (sealed system) filled with the curable composition was warmed to 120°C, and stored for 3 hours. Then, the viscosity was measured at 120°C and compared with the viscosity of the composition before storage. Thus, the rate of an increase in viscosity was calculated.

```
Rate of an increase in viscosity (times) = viscosity

after storage for 3 hours at 120°C / initial viscosity
```

Table 1 shows the evaluation results.

[Table 1]

| | | | Example 1 | Example 2 | Example 3 | Example 4 | Example 5 | Comparative Example 1 | Comparative Example 2 | Example 6 | Example 7 | Example 8 | Example 9 | Example 10 | Comparative Example 3 | Comparative Example 4 | Example 11 | Example 12 |
|---|---|---|---|---|---|---|---|---|---|---|---|---|---|---|---|---|---|---|
| Component (A1) | A1-1 | | 50 | 50 | 50 | 50 | 50 | 50 | 50 | | | | | | | | 50 | |
| Component (A2) | A2-1 | | | | | | | | | 50 | 50 | 50 | 50 | | 50 | 50 | | |
| | A2-2 | | | | | | | | | | | | | 50 | | | | 50 |
| Component (B1) | NEOSTANN U50 note 1) | NITTO KASEI Co., Ltd. | 6 | 2.38 | 2.38 | 2.38 | 2.38 | | | | | | | | 2.38 | 2.38 | 2.38 | |
| Component (B2) | NEOSTANN U220H note 2) | NITTO KASEI Co., Ltd. | | | | | | 1 | | 0.1 | | | | | | | | |
| | NEOSTANN U100 note 3) | NITTO KASEI Co., Ltd. | | | | | | | 6 | | 0.2 | 0.2 | 0.2 | 0.2 | | | | 0.2 |
| Component (C) | DEAPA note4) | Koei Chemical Co., Ltd. | | 0.35 | 0.35 | 0.35 | 0.35 | | | | | | | | 0.35 | 0.35 | 0.35 | |
| Component (D) | D-1 | | 50 | 50 | 25 | | 50 | 50 | 50 | | | | | | | | 50 | |
| | D-2 | | | | | | | | | 50 | 50 | 25 | | 50 | 50 | 50 | | 50 |
| | D-3 | | | | 25 | 50 | | | | | | 25 | 25 | | | | | |
| Component (E) | FTR 6125 note 5) | Mitsui Chemicals, Inc. | 50 | 50 | 50 | 50 | 50 | 50 | 50 | 50 | 50 | 50 | 50 | 50 | 50 | 50 | 50 | 50 |
| Stabilizer | IRGANOX 245 | Ciba Inc. | 1 | 1 | 1 | 1 | 1 | 1 | 1 | 1 | 1 | 1 | 1 | 1 | 1 | 1 | 1 | 1 |
| Silane coupling agent | A-1120 note 6) | Momentive Performance Materials Inc. | 4 | 4 | 4 | 4 | | 4 | 4 | 4 | 4 | 4 | 4 | 4 | 4 | | 2 | 2 |
| | A-187 note 7) | Momentive Performance Materials Inc. | | | | | 4 | | | | | | | | | 4 | | |
| | Dynasylan 6490 note 8) | Degussa Corporation | | | | | | | | | | | | | | | 2 | 2 |

| Curing time | | (hr min) | 4'04 | 2'15 | 2'00 | 1'48 | 1'08 | 1'05 | 1day< | 0'45 | 0'35 | 0'38 | 0'43 | 0'25 | 1'20 | 1'15 | 0'57 | 0'28 |
|---|---|---|---|---|---|---|---|---|---|---|---|---|---|---|---|---|---|---|---|
| Storage stability at high temperatures | Initial viscosity (at 120 °C) | (mPa·s) | 3210 | 3140 | 3240 | 3080 | 3110 | 3100 | 3010 | 3220 | 3200 | 3090 | 3060 | 3400 | 3140 | 3230 | 3220 | 3450 |
| | Viscosity after storage at 120°C × 3 hours (at 120°C) | (mPa·s) | 4820 | 3450 | 3560 | 3390 | 4670 | 13640 | 11440 | 7730 | 5440 | 5250 | 4590 | 5780 | 19780 | 206720 | 5150 | 5800 |
| | Increase in viscosity | (times) | 1.5 | 1.1 | 1.1 | 1.1 | 1.5 | 4.4 | 3.8 | 2.4 | 1.7 | 1.7 | 1.5 | 1.7 | 6.3 | 64 | 1.6 | 1.7 |

```
note 1)  Tin neodecanoate (II)
note 2)  Dibutyltin (IV) bisacetylacetonate
note 3)  Dibutyltin (IV) dilaurate
note 4)  3-diethylaminopropylamine
note 5)  Hyrocarbon resin
note 6)  N-(β-aminoethyl)-γ-aminopropyltrimethoxysilane
note 7)  γ-glycidoxypropyltrimethoxysilane
note 8)  Vinyltrimethoxysilane condensate
```

Table 1 shows that the curable compositions described in examples are excellent in storage stability at high temperatures, and have good curability after coating.

INDUSTRIAL APPLICABILITY

The curable composition of the present invention is used for various applications or bonding of substrates as a reactive hot melt adhesive. Although not particularly limited, examples of the applications include buildings, vehicles, electric and electronic components, fibers, leather, clothes and bookbinding. The curable composition of the present invention is excellent in storage stability at high temperatures, and is therefore suitably used in assembly lines. Specifically, the composition can be preferably used in for example assembly lines for buildings, vehicles, electric and electronic components, fibers, leather, clothes and bookbinding. Use of a handgun for warming allows the composition to be favorably used at building sites and for DIY as well as the assembly lines.

**Claims**

1. A moisture-curing reactive hot melt adhesive composition comprising:

    (A1) an organic polymer containing a reactive silyl group represented by the general formula (1):

    $-SiR^1X_2$    (1)

    wherein $R^1$ is independently at least one selected from the group consisting of C1-C20 alkyl groups, C6-C20 aryl groups, and C7-C20 aralkyl groups; and X is a hydroxyl group or a hydrolyzable group; and
    (B1) a metal carboxylate and/or a carboxylic acid as a curing catalyst.

2. The moisture-curing reactive hot melt adhesive composition according to claim 1, further comprising as a component (C) an amine compound containing no reactive silyl group.

3. The moisture-curing reactive hot melt adhesive composition according to any one of claims 1 and 2, wherein the metal carboxylate (B1) is a tin carboxylate.

4. The moisture-curing reactive hot melt adhesive composition according to any one of claims 1 to 3, wherein a carbon atom adjacent to a carbonyl group of the metal carboxylate and/or the carboxylic acid (B1) is a quaternary carbon.

5. A moisture-curing reactive hot melt adhesive composition comprising:

    (A2) an organic polymer containing a reactive silyl group represented by the general formula (2):

    $-SiX_3$    (2)

    wherein X is a hydroxyl group or a hydrolyzable group; and
    (B2) a tetravalent tin compound as a curing catalyst.

**6.** The moisture-curing reactive hot melt adhesive composition according to claim 5,
wherein the tetravalent tin compound (B2) is a dialkyltin dicarboxylate.

**7.** The moisture-curing reactive hot melt adhesive composition according to any one of claims 5 and 6,
wherein the tetravalent tin compound (B2) is a dialkyltin dilaurate.

**8.** The moisture-curing reactive hot melt adhesive composition according to any one of claims 1 to 7, further comprising
as a component (D) an alkyl(meth)acrylate (co)polymer.

**9.** The moisture-curing reactive hot melt adhesive composition according to any one of claims 5 to 8,
wherein an amount of the tetravalent tin compound (B2) is 0.01 to 2 parts by weight based on 100 parts by weight
of the component (A2) or based on 100 parts by weight of a combination of the component (A2) and the component
(D) if the composition contains the component (D).

**10.** The moisture-curing reactive hot melt adhesive composition according to any one of claims 1 to 9,
wherein a main chain of the organic polymer (A1) or (A2) containing a reactive silyl group is a polyoxyalkylene polymer.

**11.** The moisture-curing reactive hot melt adhesive composition according to any one of claims 8 to 10,
wherein the alkyltmeth)acrylate (co)polymer (D) contains a reactive silyl group represented by the formula (1) :

$$-SiR^1X_2 \quad (1)$$

wherein $R^1$ is independently at least one selected from the group consisting of C1-C20 alkyl groups, C6-C20 aryl
groups, and C7-C20 aralkyl groups; and X is a hydroxyl group or a hydrolyzable group; or the formula (2):

$$-SiX_3 \quad (2)$$

wherein X is a hydroxyl group or a hydrolyzable group;
the above reactive silyl group being the same as the reactive silyl group of the component (A1) or (A2).

**12.** The moisture-curing reactive hot melt adhesive composition according to any one of claims 8 to 11,
wherein with respect to the proportion of the organic polymer (A1) or (A2) containing a reactive silyl group and the
(co)polymer (D), an amount of the component (A1) or (A2) is 10 to 70 parts by weight and an amount of the component
(D) is 30 to 90 parts by weight based on 100 parts by weight of a combination of the components (A) and (D).

**13.** The moisture-curing reactive hot melt adhesive composition according to any one of claims 1 to 12, further comprising
as a component (E) a tackifier resin.

**EP 2 578 657 A1**

<table>
<tr><td colspan="3" align="center">INTERNATIONAL SEARCH REPORT</td><td colspan="2">International application No.<br>PCT/JP2011/002939</td></tr>
</table>

A. CLASSIFICATION OF SUBJECT MATTER
*C09J201/10*(2006.01)i, *C09J11/06*(2006.01)i, *C09J133/06*(2006.01)i,
*C09J171/02*(2006.01)i

According to International Patent Classification (IPC) or to both national classification and IPC

B. FIELDS SEARCHED

Minimum documentation searched (classification system followed by classification symbols)
C09J201/10, C09J11/06, C09J133/06, C09J171/02

Documentation searched other than minimum documentation to the extent that such documents are included in the fields searched
Jitsuyo Shinan Koho           1922-1996   Jitsuyo Shinan Toroku Koho   1996-2011
Kokai Jitsuyo Shinan Koho     1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X<br>P,A | JP 2010-229199 A (Konishi Co., Ltd.),<br>14 October 2010 (14.10.2010),<br>claims 1, 5, 12; paragraph [0025]<br>(Family: none) | 1,10,13<br>2-9,11,12 |
| P,X<br>P,A | JP 2011-1464 A (The Yokohama Rubber Co., Ltd.),<br>06 January 2011 (06.01.2011),<br>claims; examples<br>(Family: none) | 5-7,9,13<br>1-4,8,10-12 |
| X<br>Y<br>A | JP 2009-24107 A (Kaneka Corp.),<br>05 February 2009 (05.02.2009),<br>claim 1; paragraphs [0001], [0056]; examples<br>2, 3<br>(Family: none) | 5-13<br>8,11,12<br>1-4 |

☒  Further documents are listed in the continuation of Box C.          ☐  See patent family annex.

*    Special categories of cited documents:
"A"  document defining the general state of the art which is not considered
     to be of particular relevance
"E"  earlier application or patent but published on or after the international
     filing date
"L"  document which may throw doubts on priority claim(s) or which is
     cited to establish the publication date of another citation or other
     special reason (as specified)
"O"  document referring to an oral disclosure, use, exhibition or other means
"P"  document published prior to the international filing date but later than
     the priority date claimed

"T"  later document published after the international filing date or priority
     date and not in conflict with the application but cited to understand
     the principle or theory underlying the invention
"X"  document of particular relevance; the claimed invention cannot be
     considered novel or cannot be considered to involve an inventive
     step when the document is taken alone
"Y"  document of particular relevance; the claimed invention cannot be
     considered to involve an inventive step when the document is
     combined with one or more other such documents, such combination
     being obvious to a person skilled in the art
"&"  document member of the same patent family

| Date of the actual completion of the international search<br>    09 August, 2011 (09.08.11) | Date of mailing of the international search report<br>    23 August, 2011 (23.08.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/002939 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 04-502023 A (Henkel KGaA),<br>09 April 1992 (09.04.1992),<br>claims; examples<br>& EP 371370 A1      & WO 1990/006332 A1<br>& DE 3840220 A1 | 5-7,9,10,13<br>8,11,12<br>1-4 |
| A | JP 8-151562 A (Sekisui Chemical Co., Ltd.),<br>11 June 1996 (11.06.1996),<br>claim 1<br>(Family: none) | 1-13 |
| A | JP 6-271834 A (Konishi Co., Ltd.),<br>27 September 1994 (27.09.1994),<br>claim 1<br>(Family: none) | 1-13 |
| A | JP 2010-116444 A (Kaneka Corp.),<br>27 May 2010 (27.05.2010),<br>claims; paragraphs [0065], [0079], [0178];<br>examples<br>(Family: none) | 1-13 |
| A | WO 2010/035821 A1 (Kaneka Corp.),<br>01 April 2010 (01.04.2010),<br>claims; paragraph [0178]; examples<br>& WO 2010/035820 A1 | 1-13 |
| A | JP 2010-84128 A (Kaneka Corp.),<br>15 April 2010 (15.04.2010),<br>claims; paragraph [0180]; examples<br>(Family: none) | 1-13 |

Form PCT/ISA/210 (continuation of second sheet) (July 2009)

## INTERNATIONAL SEARCH REPORT

| International application No. |
| --- |
| PCT/JP2011/002939 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The technical feature common to the invention in claim 1 and the invention in claim 5 is relevant to "moisture-hardening type reactive hot melt adhesive composition which contains an organic polymer having a reactive silicon group and a hardening catalyst".

                                                        (continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

**INTERNATIONAL SEARCH REPORT**

International application No.

PCT/JP2011/002939

Continuation of Box No.III of continuation of first sheet(2)

However, the above-said common point cannot be deemed to be a technical feature which clearly defines a contribution over the prior art, since said point is described in the prior-art document A (JP 8-151562 A (Sekisui Chemical Co., Ltd.), 11 June 1996 (11.06.1996), [claim 1]) and the prior-art document B (JP 6-271834 A (Konishi Co., Ltd.), 27 September 1994 (27.09.1994), [claim 1]).

Therefore, both the inventions have no same or corresponding special technical feature, and therefore cannot be considered to be a group of inventions which are so linked as to form a single general inventive concept under the provision of PCT Rule 13.1, and do not comply with unity of invention.

The following two inventions are involved in claims.

(Invention 1) the inventions in claims 1-4, 8, 10-13
(Invention 2) the inventions in claims 5-13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04335080 A
- JP H06271834 A
- JP H07258620 A
- JP S6270405 A
- JP H09272714 A

- JP 59168014 A
- JP 60228516 A
- JP 60023405 A
- JP S60228516 A